# EUROPEAN PATENT APPLICATION

(11) **EP 0 972 623 A1**
(43) Date of publication of application: **19.01.2000**
(21) Application number: 98113387.9
(22) Date of filing: 17.07.1998
(51) Int. Cl.: B29B 9/14, B29B 15/12

(54) **Granulate for the production of class A surface mouldings, process for the production of granulate and its use**

(71) Applicant: DSM N.V., 6411 TE Heerlen (NL)
(72) Inventor: Geesink, Johannes Hendrik, 6365 AR Schinnen (NL); Stokman, Petrus Henricus Maria, 6431 XJ Heerlen (NL)
(74) Representative: Godemeyer, Thomas, Dr.

(57) **Abstract**

The present invention relates to a granulate for the production of class A surface mouldings comprising a thermoplastic polymer and long fiber material with a length within a range from 1 to 25 mm characterized in that the fiber filaments in the granulate have the following dispersion conditions:
- the fibers are extending in the direction of the length of the granulate having at most the length of that granulate
- 920 to 1000 filaments per 1000 filaments are enveloped by polymer matrix as measured in the cross-section of the granulate and the percentage of this envelopment for the single enveloped filament in contact with this polymer is in the range from 80 to 100.

Further subjects of the invention are a process for preparing the granulate, the use of the granulate and mouldings made from the granulate.

## Description

The present invention relates to a new granulate which contains long fiber reinforced material for the production of class A surface mouldings especially for automotive parts. Further subjects of the invention are mouldings made from the granulate according to the invention and a process for the production of the granulate according to the invention.

Injection moulded long fiber reinforced thermoplastic compounds offer a good combination of mechanical properties, high strength modulus and high dimensional stability for moulds especially automotive parts with respect to short fiber reinforced compounds and unreinforced injection moulded polymer blends.

The interest in long fiber reinforced compounds for injection moulding has therefore increased as a result of improved manufacturing methods which yield materials that are stronger and more consistent in performance than the short fiber products. The designer's and processors for thermoplastic polymer also are becoming more aware that these reinforcements require only minimum modification of part and mould design and of injection moulding machinery.

Long fiber materials differ from short fiber materials both in method of manufacture and in the resulting properties. Conventional extrusion compounding of chopped glass fibers and resin matrix leads to a melt-mixed product, which when strand pelletized yields pellets which are about 3 mm long and contain random fibers of about 0.3 mm fiber length. In contrast thereto long fiber materials are normally made by pultrusion processes, wherein continuous fiber strength are pultruded with a melted resin matrix forming a rod or a tape.

After that the rod or the tape is pelletized to a pellet with a length for example 10 mm containing parallel fibers wherein the fibers have a length of about 10 mm as well. The above described pultrusion process allows to achieve fiber length between 10 and 20 times greater than those in short fiber parts.

For the long fiber compounds resins like nylon, polyolefines, polycarbonates, polyester, polyurethanes are used as polymer matrix. The polymer matrix may contain usual additives like fillers, stabilizer, impact modifier. Glass fiber is the dominant reinforcing medium, but carbon and aramid fibers are also used.

From the state of the art several long fiber reinforced thermoplastic compounds are known.

US 5,019,450 describes a long fiber reinforced thermoplastic material containing at least 30% by volume of reinforcing filaments extending longitudinally of the structure which have been produced in a continuous process. The thermoplastic material has an exceptionally high stiffness which results from thorough wetting of the reinforcing filaments by molten polymer in the continuous process.

EP 0 680 813 A1 describes a fiber reinforced plastic moulding composition produced by coating fibers in fluidised bed of dry plastic granules, heating to soften plastic cooling and granulating it. After a final cooling step the coated fibers can be processed into mouldings.

EP 0 554 950 A1 also describes the extrusion of moulding of long fiber reinforced thermoplastic material using composite granules obtained by cutting powder polymer impregnated fiber filaments coated with same or other polymer. The granulate has been obtained by impregnating an open bundle of continuous, parallel fibers with a thermoplastic polymer powder, forming a continuous filament from the impregnated fibers, coating the filament with a continuous outer sheath of a thermoplastic polymer the same as or different to the polymer of the powder and having a melting point the same or higher than that of the powder polymer, calendering at approximately the powder polymer softening temperature and cutting the calendered filaments into granules.

When using the long fiber reinforced thermoplastic compounds for the preparation of mouldings, especially automotive parts, it is disadvantageous that the long fiber reinforced compounds of the state of the art have a poor dispersion of some big fiber bundles (for example 1 to 10 bundles out of 100 to 1000 filaments together per square meter) as well as small filament aggregates (for example 1 to 5 aggregates of more than 10 to 20 filaments per square mm) in the polymer matrix in the mouldings for example in a fender or a bonnet. These pour dispersed big bundles give rise to irregularities in the surface of the moulding. These aggregates give rise to poor surface properties and show after the painting of the mouldings a lot of orange peel which results from the waviness of the surface of the moulding. By using these long fiber reinforced thermoplastic materials according to these state of the art it is not possible to produce mouldings especially automotive parts which fulfil the class A specification set by the automobile industry.

Therefore, it is the technical object of the present invention to provide a new long fiber reinforced thermoplastic material which does not show the above disadvantages when injection moulded to mouldings especially for automotive parts.

The technical problem is solved by a granulate which is characterised in that the fiber filaments in the granulate have the following dispersion conditions:
- the fibers are extending in the direction of the length of the granulate having at most the length of that granulate
- 800 to 1000 filaments per 1000 filaments are enveloped by polymer matrix as measured in the cross-section of the granulate and the percentage of this envelopment for the single enveloped filament in contact with the polymer is in the range from 80 to 100.

It is preferred that 950 to 1000, more preferably 990 to 1000 and most preferred 995 to 1000 filaments per 1000 filaments are enveloped. The percentage of the envelopment for the single enveloped filament in contact with the polymer matrix is preferably in the range of 90 to 100, more preferred 95 to 100. In a further preferred embodiment the concentration of the fiber in the granulate is between 20 to 80% preferably 40 to 80% by weight. The thermoplastic polymer which is used for the granulate is selected from the group comprising polyethylen, polypropylene, polyamid, polycarbonate, polyester, polyurethane, polyethylenterephthalate, polybuthylenterephthalate, ABS, SAN, polystyren, polyphenylenoxide or mixtures thereof. Usual additives, like impact modifier, short randomly distributed glass fibers, fillers and stabilizers can also be used.

It is further preferred to use fibers which are selected from the group comprising carbon fibers, glass fibers and aramid fibers. In a preferred embodiment the granulate contains carbon fiber. This leads to an electrically conductivity of the mouldings so that the mouldings can be electrostatically coated even if the mouldings comprise only 1 to 3 wt-%, preferably 1.5 to 2.5 wt-% of the moulding as long carbon fibers.

The granulate is preferably made by using the apparatus, which is described in WO 87/00563 and in NL-1004796. First the separation of the filaments is effected by spreading the filaments preferably by means of an airknife. After that a polymer powder is applied to the separated filaments. This polymer powder is preferably suspended in one or more gas streams and is then directed to the seperated filaments. In a third step the polymer powder, which is applied on the filaments, is melted in an oven whereby the consolidation of the polymer and the filaments into a tape takes place. After that the tape is cooled down and cut into the granulates. After these process steps the percentage of envelopment of the single filament in contact with the fiber is in the range between 80 and 100 % measured in the cross-section of the granulate for at least 920 to 1000 filaments out of 1000 filaments. .

It is further important to control the tension of the fibers during the process. The tension of the filaments during separation and application of the powder is put down until the granulate according to the invention is obtained. In the case glass-fibers are used the percentage of glass-fibers is lower than 65 wt-%, preferably lower 63 wt-% related to the granulate. Preferably glass-fibers are used having a sizing content below 0.5 wt-%, preferably 0.3 wt-%. The sizing is a coating which is applied to the filaments after the production of the filaments generally by the glass-fiber producer.

These granulates are used for the production of class A surface automotive parts, especially exterior body panels like fenders, hoods, bonnets, panels, trunk lids and door panels. Therefore a further subject of the invention are mouldings with class A surfaces properties which are obtainable from the granulate according to the invention by injection moulding. According to a preferred embodiment a film sprue is used for the injection moulding and the injection is carried out in form of a cascade injection.

It is also possible to use mixtures of the granulate according to the invention with other granulates of the state of the art for example granulates containing short fibers or granulates with other polymer matrix. However, these granulates must be compatible to the granulate of the present invention. If in the granulate according to the invention carbon fibers are used also glass-fibers can be used.

In the case, if nylon 66, glass fiber and mineral filler for the granulate of the present invention are used, a further surprising effect occurs. The resulting moulded parts show high dimension stability. This is advantageous, because during the painting process, which is usually done by electrophoresis technique in car manufacturing, temperatures between 180° and 210°C are used. It was surprisingly found that the moulded parts last the conditions of this electrophoresis process with the high temperatures very well. The painted mouldings showed an excellent class A surface without any dimensional change.

With the granulates according to the state of the art it was not possible to prepare mouldings which have class A surface properties. The quality of the class A surface can be defined by the distinctness of image (D.O.I.) which is a determination or measurement of reflective light waves. This distinctness of image is determined as percentage of reflective light waves which are reflected from the surface of the moulded article measured in a certain angle of reflection. In the present invention articles moulded with the granulate according to the invention can have a very good value for D.O.I. as compared to the values of the D.O.I.'s for granules and thermoplastic compositions of the state of the art.

The mouldings made from the granulate according to the invention can be used as replacement material for automotive body panels made from metal. They show similar mechanical properties, but the mouldings made from the long fiber reinforced material show a significant lower specific gravity which means that by using these material instead of metallic body panels the automobile finally has a lower weight and therefore a decreased consumption of fuel.

In the following examples the invention will be described in more detail.

### Examples

Long fiber reinforced thermoplastic materials were produced by different methods and were compared with materials which are short fiber reinforced, steel and unreinforced thermoplastic material. From these thermoplastic materials mouldings were made and the surface properties of these mouldings were measured according to the distinctness of image (D.O.I.) in order to find out if the mouldings have class A surface.

The following properties were measured:

### 1. Orange Peel - Shortterm Waviness

Orange peel was measured after moulding and painting of the panel at waviness of 1 to 1.5 mm. The sample surface is scanned by a point source laser by moving the laser over a distance of 10 cm. The light source illuminates the surface at 60° and the reflected light is measured at the same but opposite angle. When the light beam hits a peak or a valley of the surface a maximum signal is detected, on the sloops a minimum signal is registered. The higher the part of the reflected light is, the lower is the orange peel of the surface.

For the measurement of Orange Peel a Byk wave scan apparatus of Byk Gardner, USA is used.

### 2. D.-Sight-Index

The D.-Sight-Index was measured according to D.O.I. (distinctness of image) after moulding and painting the panel at a wavelength of 0.2 to 0.5 cm. The short term waviness which was measured gives data about the roughness and the coating of the mouldings. The higher the number for the D.-Sight-Index, the better is the reflection of the light which was put on the surface of the moulding. The D.-Sight-Index is measured by Diffracto® D-sight apparatus of Diffracto, USA.

### 3. Longterm Waviness (L.T.W.)

Long term waviness was also measured according to D.O.I. (distinctness of image). L.T.W. was measured at a wavelength between 1 and 20 cm.

The longterm waviness is measured by Diffracto® D-sight apparatus of Diffracto, USA.

The following thermoplastic compositions were measured.
- a1:: dry blend of PA with powder-impregnated glass fiber reinforced PA concentrate
- a2:: pultruded glass fiber reinforced PA, partly surrounded
- a3:: wire coated glass fiber reinforced PA
- a4:: wire coated commingled glass/PP reinforced PP
- a5:: wire coated high sized glass fiber and PA (4 to 8% sized)
- b:: long glass fiber reinforced thermosets (polyesters)
- C:: unreinforced thermoplastic blends (PA/PPO/rubber or PC/PBT)
- d:: steel
- Abbrevations:: PA = polyamide 6
PP = polypropylene
PBT = polybutyleneterephthalate
PB = polycarbonate
PPO = polyphenylenoxide

All compositions except a1 are compositions of the state of art. Composition a1 is the composition according to the invention.

The following table 1 shows the results:

**Table 1**

| Material | orange peel | D. -Sight-Index | L.T.W. | bundles (50-1000 filamen t/ m²) | bundles aggregates more than 8-10 per mm² | class surface | A enveloped filaments (of 1000) | % of envelopment |
|---|---|---|---|---|---|---|---|---|
| a1. | 2- 3 | 40- 70 | 50- 80 | none | none | yes | 997 | 95-100 |
| a2. | 6-10 | 80-150 | 50- 80 | 5- 20 | 5-10 | no | 915 | 95-100 |
| a3. | 7-10 | 80-150 | 50- 80 | 10-100 | 8-15 | no | 0 | 0 |
| a4. | 8-11 | 80-150 | 50- 80 | 20- 50 | 7-20 | no | 0 | 0 |
| a5. | 7-10 | 80-150 | 50- 80 | 10- 30 | 5-10 | no | 0 | 0 |
| b. | 2- 3 | 20- 75 | 40- 60 | 10-100 | - | yes | 500 | 50-100 |
| c. | 2- 3 | 50- 80 | 130 | none | none | yes | - | - |
| d. | 2- 3 | 49 | 76 | none | none | yes | - | - |

### Preparation of granulate a1

The granulate a1 is made by using the apparatus, which is described in WO 87/00563 and in NL-1004796. First the separation of the filaments is effected by spreading the filaments preferably by means of an airknife. After that a polymer powder is applied to the separated filaments. This polymer powder is suspended in one or more gas streams and is then directed to the seperated filaments. In a third step the polymer powder, which is applied on the filaments, is melted in an oven whereby the consolidation of the polymer and the filaments into a tape takes place. After that the tape is cooled down and cut into the granulate. After these process steps the percentage of envelopment of the single filament in contact with a fiber is in the range between 80 and 100 % measured in the cross-section of the granulate. It is further important to control the tension of the fibers during the process. The tension of the filaments is during separation and application of the powder is put down as low as possible to keep the process running until the granulate according to the invention is obtained. As fibers PPG 4588 made by PPG USA was used.

### Measurement of envelopment

The percentage of envelopment of the single filament in contact with a polymer in the cross-section of the granulate was measured as follows: A grain of granulate was embedded in an epoxy-resin and the embedded grain was cut perpendicular to the direction of the glass-fibers. The cross-section of the reinforcing fibers perpendicular to the orientation direction of the fibers is exposed by grinding and polishing for 1 minute using SIC wet papers of numbers 220, 500, 1000 and 2400 and additionally diamont slurries with the particle size of 6 µm, 1 µm for 1.5 minutes. The SEM image of the polished surface is photographed. The envelopment was determined from the SEM-photo manually. Determined was the percentage of envelopment of these fibers and the percentage of envelopment of the single fiber.

From Table 1 can be seen that the granulate a1 according to the invention shows results which are better than the results of steel (see d.) and even better than other reinforced materials (see a2 to a5). Therefore with the granulate according to the invention it is possible to produce class A surface mouldings with high and excellent quality preferably for the automotive industry.

## Claims

1. Granulate for the production of class A surface mouldings comprising a thermoplastic polymer and long fiber material with a length within a range from 1 to 25 mm characterized in that the fiber filaments in the granulate have the following dispersion conditions:
- the fibers are extending in the direction of the length of the granulate having at most the length of that granulate
- 920 to 1000 filaments per 1000 filaments are enveloped by polymer matrix as measured in the cross-section of the granulate and the percentage of this envelopment for the single enveloped filament in contact with this polymer is in the range from 80 to 100.

2. Granulate according to claim 1, wherein the percentage of envelopment for the single enveloped filament is 90 to 100.

3. Granulate according to claims 1 or 2, wherein the percentage of envelopment for the single enveloped filament is 95 to 100.

4. Granulate according to claims 1 to 3, wherein 950 to 1000 filaments per 1000 filaments are enveloped.

5. Granulate according to claims 1 to 4, wherein 990 to 1000 filaments per 1000 filaments are enveloped.

6. Granulate according to claims 1 to 5, wherein 995 to 1000 filaments per 1000 filaments are enveloped.

7. Granulate according to claims 1 to 6, wherein the thermoplastic polymer is selected from the group comprising polyethylene, polypropylene, polyamide, polycarbonate, polyester, polyurethane, polyethylenterephthalate, polybuthylenterephthalate, ABS, SAN, polyphenylenoxide, polystyrene or mixtures thereof.

8. Granulate according to claims 1 to 7, wherein the fibers are selected from the group comprising carbon fibers, glass fibers, aramid fibers.

9. Granulate according to claims 1 to 8, wherein the fibers comprise carbon fibers.

10. Process for the production of the granulate according to claims 1 to 9 characterized by the following steps:
- spreading the filaments
- applying polymer powder to the separated filaments
- melting the polymer
- consolidation of the molten polymer and the filaments into a tape
- cooling down the tape
- cutting the tape into the granulate
- wherein the tension of filament during the process is put as down as possible to keep the process running until the granulates of claims 1 to 9 are obtained.

11. Process according to claim 10, wherein the surface treating composition is a silane compound or a surfactant.

12. Use of the granulate of claims 1 to 9 for the production of class A surface automotive parts.

13. Mouldings with class A surface properties, obtainable from the granulate according to claims 1 to 9 by injection moulding.

14. Mouldings according to claim 13, wherein the mouldings are automotive parts.

15. Mouldings according to claims 13 or 14, wherein the mouldings are exterior body panels like fenders, hoods, bonnets, panels, trunk lids, door panels.

16. Mouldings according to claims 13 to 15, wherein for the injection moulding a film sprue is used.

17. Mouldings according to claims 13 to 16, wherein the injection is carried out in form of a cascade injection.

18. Mouldings according to claims 13 to 17, wherein in the case carbon fibers are used also glass-fibers can be used.

19. Mouldings according to claims 13 to 18, wherein the moulding contains 1 to 3 % by weight carbon fibers.

20. Mouldings according to claims 13 to 19, wherein the mouldings contain 1.5 to 2.5 wt-% of carbon fibers.
